(19) Europäisches Patentamt
European Patent Office
Office européen des brevets

(11) **EP 3 603 043 B1**

(12) **EUROPEAN PATENT SPECIFICATION**

(45) Date of publication and mention
of the grant of the patent:
**14.09.2022  Bulletin 2022/37**

(21) Application number: **18715240.0**

(22) Date of filing: **21.03.2018**

(51) International Patent Classification (IPC):
***H04M 11/06*** *(2006.01)*      ***H04M 7/12*** *(2006.01)*

(52) Cooperative Patent Classification (CPC):
**H04M 11/066; H04M 7/1295**

(86) International application number:
**PCT/GB2018/050736**

(87) International publication number:
**WO 2018/172771 (27.09.2018 Gazette 2018/39)**

(54) **TELEPHONE SIGNAL PROCESSING**

TELEFONSIGNALVERARBEITUNG

TRAITEMENT DE SIGNAUX TÉLÉPHONIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **21.03.2017   GB 201704489**

(43) Date of publication of application:
**05.02.2020   Bulletin 2020/06**

(73) Proprietor: **Sycurio Limited
Guildford, Surrey GU1 4HN (GB)**

(72) Inventors:
• **TAO, Yufei
Crowthorne RG45 6HT (GB)**

• **BALDWIN, Thomas
Guilford
Surrey GU1 4HN (GB)**

(74) Representative: **Bryers LLP
Bristol & Bath Science Park
Dirac Crescent, Emerson's Green
Bristol, BS16 7FR (GB)**

(56) References cited:
**EP-A2- 1 093 310      US-A1- 2003 194 082
US-B1- 6 199 036      US-B1- 6 674 855
US-B1- 8 831 204**

**Description**

This invention relates to a method of and apparatus for the processing of telephone signals, more specifically to the removal of data signal fragments known as DTMF 'bleed'. The invention may find application where DTMF tones are used to transmit sensitive data during a telephone call, in particular where it is desirable to ensure the DTMF tones are adequately blocked from reaching certain elements or parts of the telephone network.

Dual-tone multi-frequency (DTMF) is a telecommunication signalling system using the voice-frequency band over telephone lines between telephone equipment and other communications devices.

The 16 DTMF digits (0-9, A-D, * and #) are each represented by a different pair of audible tones comprising the following frequencies:

| DTMF keypad frequencies | 1209 Hz | 1336 Hz | 1477 Hz | 1633 Hz |
|---|---|---|---|---|
| 697Hz | 1 | 2 | 3 | A |
| 770 Hz | 4 | 5 | 6 | B |
| 852 Hz | 7 | 8 | 9 | C |
| 941 Hz | * | 0 | # | D |

These DTMF tones can be uniquely identified at a receiver through signal processing.

In-band DTMF tones sometimes need to be blocked or removed from the normal audio stream and/or converted into other formats for further processing, eg. in applications where traditional POTS telephony needs to interact with VoIP systems.

Sometimes the telephony devices responsible for detecting and removing in-band DTMF fail to remove the DTMF tones completely, causing a small portion of the in-band DTMF to remain in the audio stream. These small remnants or residual portions of the DTMF tones-which are usually of a much shorter duration than the original DTMF tones - are referred to as DTMF bleed(s).

DTMF bleed is frequently encountered when in-band DTMF digits from the telephone keypads in traditional telephone networks are converted into other formats, eg. out-of-band session initiation protocol (SIP) signalling, or event packets in a real-time transport protocol (RTP) stream (eg. in accordance with RFC2833, the IETF standard for "RTP Payload for DTMF Digits, Telephony Tones and Telephony Signals").

The common attitude towards DTMF bleeds is that they can be tolerated as long as their duration is not so long that they are detected as (new) DTMF digits. ITU standard Q.24 for "Multi-frequency push-button signal reception" states that generally the minimum duration of a DTMF tone is 40 milliseconds. It is therefore normal for DTMF bleeds of shorter duration not to be detected as DTMF tones.

Typically, the durations of DTMF bleeds introduced by various telephony devices are usually between a few to around 20 milliseconds in duration (some may be even longer). Such DTMF bleeds are commonly considered as acceptable according to the ITU standard and most telephony device vendors.

Although DTMF bleeds do not generally pose significant problems for most applications, they do potentially cause serious consequences for applications where sensitive data e.g. credit card numbers etc. is transmitted from telephone keypads via DTMF tones.

Examples of such systems are described in the applicant's UK patent GB2473376.

In such cases any bleeding through of DTMF tones into unintended telephony path(s) may risk sensitive data being intercepted for malicious purposes.

For example, in experiments to establish the minimal duration of DTMF bleed which would nevertheless allow DTMF information to be recovered (using manual extraction and additional signal processing techniques applied to each individual bleed), DTMF information was successfully extracted from DTMF bleeds as short as 2-3 milliseconds. Unfortunately, this implies that most DTMF bleeds are long enough for malicious recovery and therefore ideally ought to be removed from the unintended telephony path(s) for any DTMF system considered to be secure.

In conventional DTMF detection, audio signals are captured in the time domain, are converted into the frequency domain and an attempt is made to identify any frequency pairs present within the processing frame which might define DTMF digits (eg. by comparing their signal strength to those of other frequency components).

However, this technique cannot be used to reliably identify DTMF bleed because the duration of DTMF bleed tones is too short for their constituent pairs of frequencies to be readily identified over other frequencies present in the audio signal.

This is especially so when the audio stream contains large amounts of noise, which may comprise unpredictable frequencies and signal strengths. If, in order to detect such short duration DTMF bleed tones, the detection event is set to trigger whenever a DTMF pair of frequencies is present, even if only momentarily, then as the amount of noise increases so does the probability that such a pair of frequencies will exist in the noise by chance, leading to spurious "detection" events.

While it is theoretically possible for the telephony devices to be optimised to avoid DTMF bleeding, this is largely out of the control of application developers who, as a result, have to handle audio streams containing bleeds. Since existing telephony devices cannot detect bleeds due to their short durations, adding extra telephony devices for bleed removal is not a viable solution.

In short, it is very challenging to detect and remove DTMF bleeds using conventional frequency domain methods.

There is therefore a need for better techniques to achieve DTMF bleed removal, ones which are preferably both more effective and easier to implement than conventional techniques.

US8831204 describes a secure three-way bridge in a SIP-based processing switch protects sensitive information provided by a party during a call with an agent in a contact center. During the call, the agent may bridge an interactive voice response system ("IVR") onto the call using the secure three-way bridge so that the party can enter sensitive information, such as a credit card account, to the IVR. The information is provided by the party using dual-tone multiple frequency ("DTMF") tones that are presented in an unmodified form to the IVR, but modified and then presented to the agent, so that the agent is unable to discern the sensitive information provided by the party. Other embodiments may accomplish similar capabilities by application of components outside of the bridging structure. Further, recording systems may record the call comprising the modified audio, thus protecting the sensitive information from subsequent detection upon review of the recording.

US2003194082 decribes as part of a system and method for transmitting a signaling tone over a packet switched data (or other communication) network, an audio encoder which may have a speech encoding unit and a tone distorter. The tone distorter may distort one or more components of a signaling tone within an audio signal and the speech encoding unit may encode speech and the distorted signaling tone within the audio signal. A control signal may be sent to a tone generator to reproduce the distorted tone.

US6199036 describes tone detection in a telecommunication system which uses an auto correlation algorithm to detect pitch period, then matches this with known pitch periods for the tones. Enhanced reliability or speed of detection and reduction in computational load can be achieved. This can improve quality of echo cancellation where cancellers treat tones differently to speech. Similarly, with speech coding, since implementation of some coding standards involves tones being treated differently to speech. The auto correlation output can be used both for noise detection and tone detection, to save computational resource.

US6674855 describes a multifrequency detector, such as a DTMF detector, which includes a Goertzel module detecting energies of a current frame of an incoming signal at nominal tone frequencies. A number of ratios are computed from the detected energies and supplied as an input to a multidimensional thresholding device such as a neural network. The neural network generates a decision level to be used in a subsequent frame decision. A frequency estimation module also receives the incoming signal and generates a number of frequency estimation indications to be used in the final determination of whether the incoming signal contains a valid multifrequency signal. A low-level decision module returns a frame decision result (D/N) for the current frame based on inputs from the Goertzel module and the decision level. A high-level decision module receives the frame decision result and information based on the frequency estimation indications. A state machine generates a digit start signal when the frame decision result and the frequency estimation information indicate a transition from an out-of-digit state to an in-digit state. The detector outputs a suggested digit provided by the Goertzel module and an affirmative digit detection result when the state machine transitions from out-of-digit to in-digit.

EP1093310 describes a tone detector for detecting a tone such a DTMF tone by converting the signal to the frequency domain, then extracting signal features to input to an artificial neural network. The neural network is trained to detect the tone, or detect which of many predetermined tones, is present. It can be arranged to operate more quickly than conventional tone detection methods. This is particularly significant for coding or compressing signals which contain tones and other information. Since it is often more efficient to code or compress such tones separately from the other information, it can be essential to detect and separate such tones very quickly to avoid the risk of a single tone being coded or compressed twice, particularly if the signal is delay sensitive. A telephone conversation is an example.

According to one aspect of the invention, there is provided a method of processing a telephone signal comprising voice signals and data signals, the method comprising: detecting the presence of an artefact in the telephone signal indicative of the presence of a residual data signal fragment associated with an earlier attempted attenuation of a data signal; and processing the telephone signal by further attenuating the telephone signal in the region of the artefact in order to remove the residual data signal fragment from the telephone signal.

Preferably, wherein the data signal comprises at least one of: an acoustic signal, acoustic signal according to an acoustic data transmission protocol, and a DTMF tone.

Preferably, attenuating the telephone signal in the region of the artefact comprises at least one of: omitting or dropping or deleting a portion of the telephone signal, replacing a portion of the telephone signal, and/or modifying a portion of the telephone signal.

Preferably, the method further comprises further attenuating the telephone signal only when residual data signal fragments are expected to be present.

Preferably, processing of the telephone signal occurs in the time domain.

Preferably, the artefact comprises a spike in the telephone signal, defined by the ratio of the maximum or peak amplitude of the telephone signal to the noise floor exceeding a threshold.

The terms artefact and spike may be used interchangeably.

The duration of the artefact or spike may be less than 40 milliseconds, less than 30ms, less than 20ms, less than 15ms, less than 10ms, less than 5ms, less than 2ms, less than 1ms.

Frequency domain signal processing may be used to assist with artefact or spike detection.

Preferably, the method further comprises processing the telephone signal as a sequence of frames. Each frame may have a duration of 50 milliseconds or less, 40 milliseconds or less, 30ms or less, 20ms or less, 15ms or less, 10ms or less, 5ms or less, 2ms or less, 1ms or less.

Preferably, the frame duration and/or position is determined by means of a neural network.

Preferably, the neural network is provided with an input comprising the pre-processed telephone signal and a training example comprising a telephone signal with an artefact determined from a telephony environment and/or artificially generated. A time-domain training example may be a 'spike' or the wave form of a few periods of the dual frequency signal.

The frame duration and/or position may be determined by a parameter in dependence on the telephone signal source.

The frames may be processed individually or in at least pairs and compared pairwise.

Preferably, attenuating the telephone signal in the region of the artefact comprises dropping the frame in which the artefact is detected. This may comprise replacing the frame in which the artefact or spike is detected. Alternatively, the frame may be replaced with a frame containing no artefact, or a frame containing a noise signal, or a copy of a previous frame or portion of a previous frame.

In a further embodiment, the artefact comprises a data packet in the telephone signal indicative of the presence of a residual data signal fragment associated with an earlier attempted attenuation of a data signal, the method further comprising: buffering a first portion of the telephone signal; on detection of an indicative data packet in a second portion of the telephone signal, deleting the buffered first portion of the telephone signal.

The indicative data packet may be, for example, a RFC 2833 packet, a RFC 4733 packet, a SIP INFO message, a SIP NOTIFY message, or a SIP KPML message or similar.

The duration of the buffered first portion of the telephone signal may be less than 300 milliseconds, less than 200 milliseconds, less than 100 milliseconds.

Preferably, the duration of the buffered first portion of the telephone signal buffered is such that the end-to-end delay of the system as a whole is less than 100 milliseconds.

The duration of the buffered first portion of the telephone signal may be determined in dependence on probability statistics of the delay between the arrival of residual data signal fragments and related indicative data packets.

The likelihood of residual data signal fragments may be determined in dependence on a probability function relating the likely presence of residual data signal fragments to the rate of receipt of data signals.

Artefact detection and indicative data packet methods may be used in combination.

According to another aspect of the invention there is provided a telephone call processor for processing telephone calls comprising voice signals and data signals, the call processor being adapted to: receive voice signals and data signals at a first telephone interface; detect the presence of an artefact in the telephone signal indicative of the presence of a residual data signal fragment associated with an earlier attempted attenuation of a data signal; process the telephone signal by further attenuating the telephone signal in the region of the artefact in order to remove the residual data signal fragment from the telephone signal; and transmit the processed voice signals and data signals via a second telephone interface.

Preferably, the call processor is adapted to attenuate the telephone signal in the region of the artefact by means of at least one of: a) omitting or dropping or deleting a portion of the telephone signal, b) replacing a portion of the telephone signal, and/or c) modifying a portion of the telephone signal.

Preferably, the call processor is adapted to attenuate the telephone signal only when residual data signal fragments are expected to be present.

Preferably, the call processor is adapted to process the telephone signal in the time domain.

Preferably, the call processor is further adapted to use frequency domain signal processing to assist with artefact or spike detection.

Preferably, the call processor is further adapted to process the telephone signal as a sequence of frames. Each frame may have a duration of 50 milliseconds or less, 40 milliseconds or less, 30ms or less, 20ms or less, 15ms or less, 10ms or less, 5ms or less, 2ms or less, 1ms or less.

Preferably, the call processor is adapted so that the frame duration and/or position is determined by means of a neural network.

Preferably, the call processor is adapted so that the neural network is provided with an input comprising the pre-processed telephone signal and a training example comprising a telephone signal with an artefact determined from a telephony environment and/or artificially generated.

Preferably, the call processor is adapted so that the frame duration and/or position is determined by a parameter in dependence on the telephone signal source.

Preferably, the call processor is adapted to process the frames individually or in at least pairs and compare the frames pairwise.

Preferably, the call processor is further adapted to attenuate the telephone signal in the region of the artefact by dropping the frame in which the artefact is detected.

Preferably, the call processor is further adapted to attenuate the telephone signal in the region of the artefact by replacing the frame in which the artefact is detected and/or to replace the frame with a frame containing no artefact, or a frame containing a noise signal, or a copy of a previous frame or portion of a previous frame.

Preferably, the artefact comprises a data packet in the telephone signal indicative of the presence of a residual data signal fragment associated with an earlier attempted attenuation of a data signal, and the call processor is further adapted to: buffer a first portion of the telephone signal; on detection of an indicative data packet in a second portion of the telephone signal, delete the buffered first portion of the telephone signal.

Preferably, the call processor is adapted to determine the duration of the buffered first portion of the telephone signal in dependence on probability statistics of the delay between the arrival of residual data signal fragments and related indicative data packets.

Preferably, the call processor is adapted to determine the likelihood of residual data signal fragments in dependence on a probability function relating the likely presence of residual data signal fragments to the rate of receipt of data signals.

Generally, there is provided an apparatus for carrying out any of the methods described. Further features of the invention are characterised by the dependent claims.

Furthermore, features implemented in hardware may generally be implemented in software, and vice versa. Any reference to software and hardware features herein should be construed accordingly.

The invention will now be described, purely by way of example, with reference to the accompanying drawings, in which:

Figure 1 shows part of a telephony system, wherein a caller is in communication over a communications network with an agent such as those employed in a call centre;

Figure 2 shows another example of a telephony system;

Figure 3 shows an example time-domain amplitude plot of a telephone call with 'blocked' DTMF tones;

Figure 4 shows a zoom-in plot of the first artefact or spike in Figure 3;

Figure 5 shows the basic logic for time-domain DTMF bleed removal; and

Figure 6 shows an example of a bleed probability function.

*Overview*

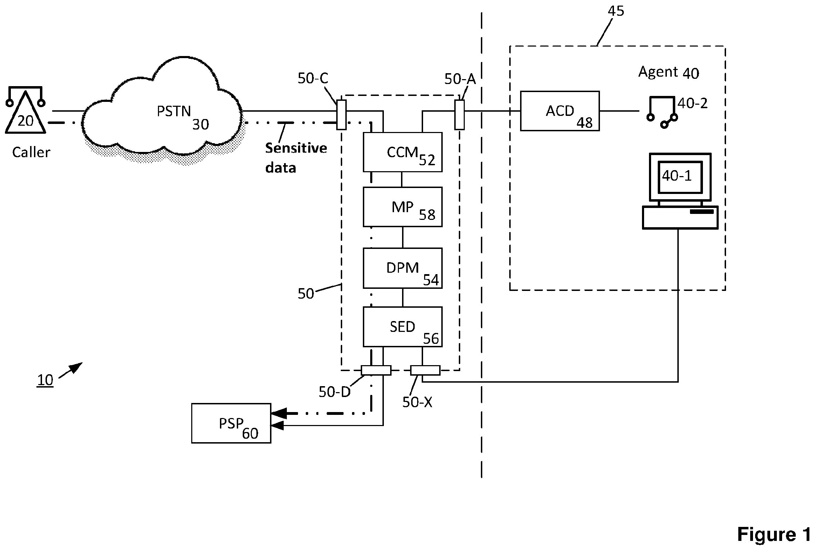

Figure 1 shows part of a telephony system 10, wherein a caller 20 is in communication over a communications network 30 with an agent 40 such as those employed in a call centre. The call is relayed via a call processor 50 supplied by a secure DTMF service provider.

The call processor 50 may, for example, be similar to that described in the applicant's UK patent GB2473376, in this example comprising a first, caller-facing telephone interface 50-C, second, agent-facing telephone interface 50-A and a data interface 50-D for communicating with an external entity 60 for say authentication / authorisation. Additional interfaces 50-X may be provided for telephone and/or data, for example for allowing the agent 40 to trigger operation or mode-switching of elements of the call processor 50 from the agent computer 40-1. In some embodiments the functionality of one or more interfaces 50-A, 50-C, 50-D, 50-X may be combined in a single interface or divided between multiple interfaces.

Typically, the call processor 50 comprises constituent components such as a Call Control Module (CCM) 52, Data Processing Module (DPM) 54 and security device (SED) 56. The call processor 50 or one or more of its constituent components may be located within the call centre or external to it.

Where external entity 60 is a payment service provider (PSP) this may thus allow for the agent 40 to process card payments made by the caller 20 during a phone call, with sensitive data (eg. card details) provided by the caller 20 via DTMF tones being processed by the call processor 50 such that they are prevented from propagating to the agent 40. The caller 20 and agent 40 may remain in voice communication throughout - or for a substantial part of - the call.

In more detail:

- Usually, during a voice call, audio (DTMF) tones are passed through (via the Call Control Module, CCM) from Caller 20 to the Contact Centre 45 (for example, to allow navigation of an interactive voice response or IVR menu system) and, via an Automatic Call Distributor (ACD) 48, to the Agent 40.

- When a card payment is to be made, the Agent 40 places the call processor 50 into 'secure mode' by sending a triggering signal (eg. '#') from the Agent computer 42 to the DPM 54. This instructs the CCM 52 to block transmission of DTMF tones to the Agent during the immediately following period in which the Caller is entering sensitive data (eg. payment card data).

- In addition, while the Caller 20 is entering sensitive data during secure mode, audio 'masking tones' are transmitted to the Agent headset 40-2 to cover any 'bleed' of DTMF tones into the audio stream which may occur - these may also act as an audio progress indicator for the Agent 40.

- In some examples not being part of the invention, a visual progress indicator is displayed on the Agent computer 40-1, usually in the form of characters such as a '*' per digit entered by the Caller 20. Alternatively, or in addition, indicators may be used only to signal the stage and/or completion of the process.

- In some embodiments, a media proxy (MP) 58 is used to remove all traces of DTMF at the call processor 50 - in which case masking tones may not be used.

- Being able to receive DTMF in binary format is the preferred option when using a media proxy (MP).

- Forwarding of data between the CCM 52, DPM 54, security device SED 56 and the PSP 60 is essentially in ASCII format, albeit repackaged eg. as UTF-8, HTML etc.

Some telephone networks, particularly those of large network providers, are relatively homogenous or at least adhere to strict protocols such that there are essentially no issues with DTMF bleed.

Increasingly often, however, telephone networks are heterogeneous, with a mixture of different protocols. DTMF tones may be converted into different ASCII / binary formats as a matter of course during various stages of transmission through the telephony / computer network and subsequently reconstructed into audible tones. This may occur for example when SIP-only networks carrying DTMF in signalling formats (out-of-band SIP signalling or RFC2833) - which would in principle be immune from issues of DTMF bleed - are integrated with networks making use of other protocols.

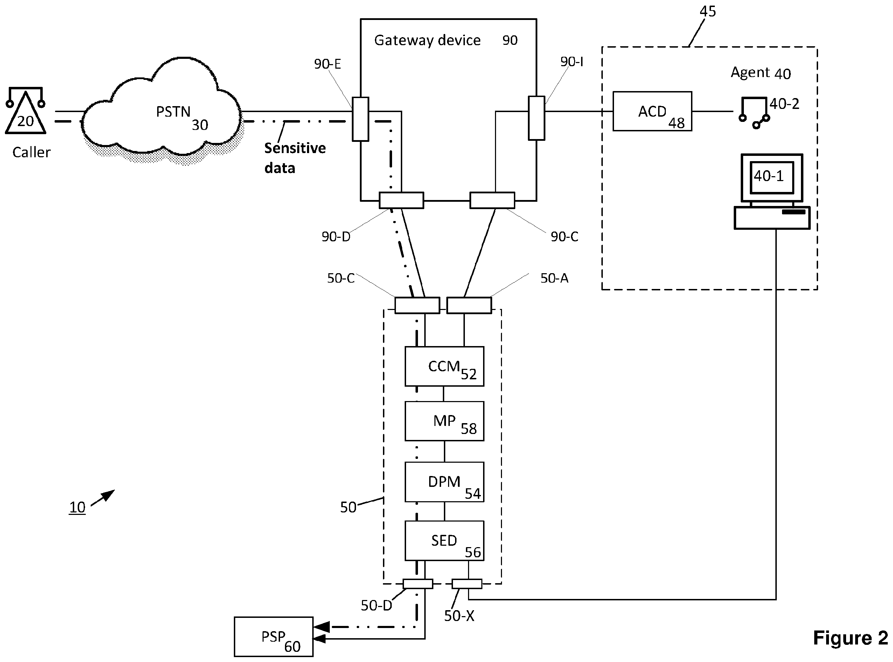

As discussed above, there may therefore be circumstances wherein DTMF 'bleed' occurs, which may allow for sensitive information to be reconstructed from portions or remnants of DTMF signals which nevertheless propagate through to the call centre 45 and/or agent 40. Figure 2 shows a variant of the arrangement shown in Figure 1, where a gateway device 90 is arranged between the call processor 50 and the communications network 30.

The gateway device 90 may be a session border controller (SBC) as often used for environments where all telephony connections are made using SIP; the gateway device 90 may be a protocol-converting device (eg. where the connections to the communications network 30 and to the agent 40 are made using a protocol which the call processor 50 does not natively support, for example ISDN). One example of such a protocol converting device is the Integrated Services Router (ISR) product range from Cisco.

In the arrangement illustrated in Figure 2 telephony (media and signalling) potentially containing sensitive data is received from the communications network 30 at a caller-facing interface 90-E of a gateway device 90. The gateway device 90 routes the call (or converts and routes the call) via a 'dirty' interface 90-D to the caller-facing telephone interface 50-C of the call processor 50. The call is routed back to the gateway device 90 via a 'clean' interface 90-C from an agent-facing telephone interface 50-A of the call processor 50. The gateway device 90 then routes the call (or converts and routes the call) onward to the agent 40 via its agent-facing interface 90-I. In some examples not being part of the invention the functionality of one or more interfaces 90-E, 90-D, 90-C, 90-1 may be combined in a single interface or divided between multiple interfaces. The call processor 50 is as described above.

At any or none of the internal routing stages in the gateway device 90, the gateway device 90 may optionally perform protocol conversion or interworking tasks on the call.

### Time-domain DTMF bleed removal

Experiments have shown that DTMF bleed signals have certain distinctive characteristics in the time-domain. One is that they tend to comprise artefacts such as 'spikes' or sharp bursts of signals, whereas the normal audio signals do not usually exhibit such prominent characteristics.

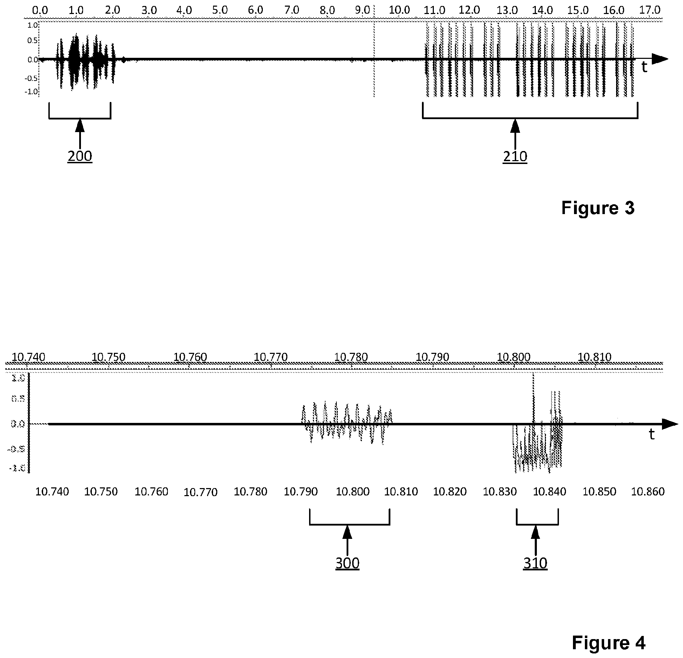

Figure 3 shows an example time-domain amplitude plot of a telephone call with 'blocked' DTMF tones. Normal speech 200 is visible for the first few seconds followed by a series of sharp spikes 210 related to DTMF bleeds.

Figure 4 shows a zoom-in plot of the first artefact or spike in Figure 3. DTMF bleed spikes 300 of over 10 milliseconds are visible along with a noise burst 310 which does not contain either normal audio or DTMF information.

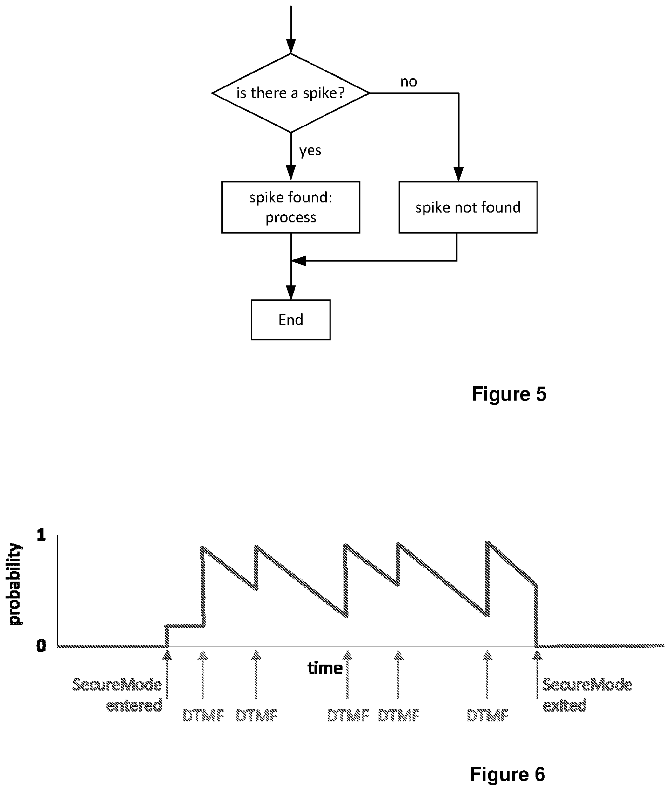

Figure 5 shows the basic logic for time-domain DTMF bleed removal.

The basic idea of the method is to determine the time-domain characteristics of the bleed signals that differentiate them from normal audio signals, and process signals that exhibit such characteristics.

Generally, the aim is to detect the 'spikes' in the audio stream characteristic of DTMF bleed and process the signal in the vicinity sufficiently in order to remove or replace the spike while leaving any speech in the signal unaffected.

Typically, different call sources, for example originating from different telephone networks, will have different DTMF bleed characteristics and a plurality of call processors (or DTMF bleed removal processors) may be required specific to the characteristic DTMF bleed. For example, a different processing algorithm may be used for each particular characteristic DTMF bleed, or a common algorithm may be adapted with parameters specific to each particular characteristic DTMF bleed.

As mentioned, even if DTMF are not reliably detected by telephony devices (e.g. after going through some codecs such G729) at least some may still be detectable manually or by applying different detection thresholds. The bleed removal described here can be used to remove residual spikes regardless of the prior processing. The spike identification threshold may be selected appropriately to avoid excessive false spike identification.

The telephone signal is processed as a sequence of 20ms frames, as used in the standard G.711 Pulse Code Modulation (PCM) waveform codec. Most DTMF bleeds are found to lie within a single frame of this size; in one example, it was observed that spikes are typically of 13ms or less duration. As used herein, unless otherwise specified, the frames referred to are processing frames used in time-domain DTMF bleed removal, and not for example speech frames of an audio codec.

Frames may be considered individually or in groups of two or more. In the latter, one frame may be buffered and compared pairwise with a following frame.

When the 'spikes' are detected they are removed regardless whether they contain DTMF information or not, ie. the decision whether to drop a frame is binary: if a spike is detected the frame is dropped.

In this example, both the real bleed 300 and the noise burst 310 would be removed. Since normal audio signals do not usually contain 'spikes', with a suitable choice of parameters such normal audio signals are left largely intact.

In some circumstances, spikes may span the boundary between two consecutive frames, requiring both frames to be dropped and loss of up to 40ms of audio. This may result in a noticeable interruption to speech but this is likely to nevertheless be considered acceptable in view of the risk of otherwise allowing sensitive information to be disclosed via DTMF bleed, ie. during "secure mode".

The bleed detection method based on recognition of the signal characteristics may be carried out using different approaches, eg.

- manual parameter approach: by manually defining the parameters describing the characteristics of spike and the surrounding audio signal; or
- neural network approach: by deploying pre-trained neural network(s), with the input being the original or pre-processed audio signal; the training examples of the neural network may be real bleed signals from telephony environments, artificially generated or a combination of both. A time-domain training example may be a 'spike' or the wave form of a few periods of the dual frequency signal.

There are several practical considerations regarding the manual parameter approach:

### - defining a 'spike'

Spikes are generally understood to be 'high and narrow' but their detection will be determined by how this is defined by various parameters eg. amplitude, power, duration etc. Different choices of parameters and values will lead to different results. These parameters can be selected and optimised to suit a specific telephony set up such that a satisfactory rate of bleed removal is achieved and acceptable audio quality is maintained after the processing.

### - noise

The presence of noise may have significant impact on the identification of the spikes. We may identify two different types of noise:

- background noise, ie. a base level of noise throughout the telephone signal, also referred to as the signal having a high noise 'floor'

- noise bursts, ie. noise localized in the vicinity of the spikes/bleeds

Typically, spikes are identified where the ratio of the maximum or peak amplitude A (or related quantity such as power) to noise floor N exceeds a threshold, ie.

$$\frac{|A_{max}|}{N} > Threshold$$

The selection of a suitable threshold value generally depends considerably on the specific telephony system, and may be determined for a particular call processor 50 by testing. For one telephony system a threshold value of for example 100 may be suitable, whereas for another telephony system a very different threshold value may be suitable.

A high noise floor can necessitate selection of a relatively low threshold, which gives rise to higher probabilities of false alarm (normal audio detected as spikes and removed), causing degradation of audio quality. Various techniques may be used to alleviate problems introduced by high noise floors. For example, frequency domain signal processing techniques may be applied in addition to the said algorithm for spike identification, to reduce false alarms by only removing the 'spike' if its frequency spectrum shows high probability of containing DTMF frequency components.

Noise bursts may be addressed by various techniques. For example, different positioning of the processing frame (instead of using static processing windows) can assist in reducing the effect of noise bursts on spike identification. Data (single frame or multiple buffered frames) can be searched through using processing windows of different sizes and positions to capture spikes that may otherwise be (partly) missed. This can assist in identifying spikes that reside across a boundary of a processing window; or spikes that reside closely to other spikes (such as noise bursts).

### - audio quality

As with any signal processing technique, spike removal will result in modifications to the audio signal.

The DTMF bleed-removal algorithm is only applied when DTMF signals are known to be being entered by the caller 20. This reduces the potential risk of control signals or even elements of the voice of the caller being detected as DTMF bleed and removed.

The removal of spikes may be used to enhance the quality of or otherwise alter the audio signal, for example by removing interference, noise (in particular bursty or spikey noise) etc.

If the algorithm is applied to the whole duration of the audio stream, satisfactory audio quality is maintained by proper choice of parameters that control the bleed removal.

### - advantages

Potential advantages of the time-domain method may include one or more of the following:

- Well-suited for handling narrow bleeds where conventional 'frequency domain algorithm' struggles most.
- Minimises the impact on normal audio as it only removes signals with bleed characteristics that are not usually present in normal audio, rather than silencing out all audio as may be the case with some embodiments of the 'buffering and backup' algorithm described below.
- Relatively simple to implement
- Computationally light
- Does not rely on external triggers
- Does not require buffering for most cases where bleeds are very short and thus does not introduce a large latency into the audio signal.

### - extensions

The method may be extended in various ways to improve the bleed removal performance or (further) reduce the computational cost. Some examples are:

- Use of processing frames of different durations; in order to achieve this additional buffering of the signal may be provided; for example using longer processing frames may allow more effective handling of bleeds of longer duration, and using processing frames of different sizes and positions can improve spike detection as discussed above.

- External triggers may be used to turn the bleed removal algorithm on/off (ie. turning on bleed detection and removal only during secure mode) or modify the bleed detection parameters.

- Signal evaluation in the frequency domain may be included, eg. for bleeds with longer durations, or to address high noise floor as discussed above.

- In some embodiments, bleed detection and removal would be active throughout the call.

- Instead of removing the spikes they may be replaced with silence or they may be replaced with a signal, for example a signal that matches the background noise such that the removal of the bleed is less obvious to the parties on the phone call, such as a previous frame or a fragment of a previous frame; the spikes may also be replace with other audio data such as a pre-recorded audio file (e.g. a tone or comfort noise).

- The signal processing may be applied to other acoustic signal tones not according to the DTMF protocol; for example acoustic transmissions according to an acoustic data transmission protocol may be processed to remove signal bleed.

*Buffering and Backup DTMF bleed removal*

Another way to remove bleeds relies on determining the approximate timing of DTMF bleeds from the receipt of notification of DTMF events, for example from RFC2833 packets (or comparable, where available, e.g. RFC 4733). This may be performed by the media proxy (MP) 58 as shown in Figures 1 or 2 to remove traces of DTMF at the call processor 50, in addition to or alternative to the time-domain DTMF bleed removal process described above.

In this alternative, sufficient audio needs to be buffered so that when the notification of a DTMF event is received (eg a first RFC 2833 packet for the DTMF digit is received), the previously buffered audio is silenced (or attenuated, e. g. by dropping or replacing as described above) because it may contain DTMF bleed. Since the DTMFs are expected imminently, such silencing causes only a relatively short loss of speech (due the audio being silenced in proximity to an incoming DTMF tone). In practice, this is likely to be no worse than the drops commonly experienced on mobile calls, and intelligibility should not be significantly compromised.

Since the delay between the DTMF bleed and its corresponding first RFC 2833 packet is undefined and varies for different devices, the appropriate amount of buffering may vary, and a suitable buffer for one setup may not perform as well for a different setup. A larger buffer helps in effective bleed removal but introduces longer delay into the audio stream which may affect the quality of the call. Generally, it is understood that an audio delay (latency) in the telephony path in the range of 150-200 milliseconds will start to be noticeable and when it exceeds 300 milliseconds the quality is considered poor. Consequently, a buffer of less than 300 milliseconds, preferably less than 200 milliseconds or less than 100 milliseconds is used.

The delay between the DTMF bleed and its corresponding first RFC 2833 packet for a particular telephony set up may be measured (and for example associated with an IP address of a media origin or sender) and used in determining an optimal buffer size. Over time, statistics can be gathered regarding the performance of specific endpoints; this information can be used to characterise the temporal relationship between the DTMF notification being received and the highest probability of a DTMF bleed event, in order to compile a library of appropriate buffer sizes for different connections.

In a variant, the silencing of the audio is refined by taking a bleed probability function into account that is based on receipt of per digit notifications in relation to the DTMF. If a digit notification has just been received, the probability of a bleeding fragment in the last few samples is much higher than when a period of time has elapsed since a digit notification was seen.

Figure 6 shows an example of a bleed probability function. This probability function can be used as the basis of a confidence threshold to assist a DTMF detection algorithm in deciding when to silence audio. The bleed probability function depends on the latency associated with a particular telephony set up, which can be measured and used to characterise the temporal relationship between the DTMF notification being received and the highest probability of a DTMF bleed event.

In a further variant, when notification of a DTMF event is received the buffered audio is additionally processed according to the time-domain DTMF bleed removal process described above. In this variant the time-domain processing for spike identification only occurs when notification of a DTMF event is received. This can enable reduction of the computational load compared to continuous processing of the audio for spike removal, and avoid unnecessary silencing of the audio.

It will be understood that the invention has been described above purely by way of example, and modifications of detail can be made within the scope of the invention as defined by the claims.

**Claims**

1. A method of processing a telephone signal comprising voice signals and data signals, the method comprising:

   detecting the presence of an artefact (210, 300) in the telephone signal indicative of the presence of a residual data signal fragment associated with an earlier attempted attenuation of a data signal; and
   processing the telephone signal by further attenuating the telephone signal in the region of the artefact (210, 300) in order to remove the residual data signal fragment from the telephone signal.

2. A method according to claim 1, wherein the data signal comprises at least one of:

   a) an acoustic signal,
   b) acoustic signal according to an acoustic data transmission protocol, and
   c) a DTM F tone.

3. A method according to claim 1 or 2, wherein attenuating the telephone signal in the region of the artefact comprises at least one of:

   a) omitting or dropping or deleting a portion of the telephone signal,
   b) replacing a portion of the telephone signal, and/or
   c) modifying a portion of the telephone signal.

4. A method according to any preceding claim, further comprising further attenuating the telephone signal only when residual data signal fragments are expected to be present.

5. A method according to any preceding claim, wherein processing of the telephone signal occurs in the time domain.

6. A method according to any preceding claim, wherein the artefact (210, 300) comprises a spike in the telephone signal, defined by the ratio of the maximum or peak amplitude of the telephone signal to the noise floor exceeding a threshold, preferably wherein the duration of the artefact is less than 40 milliseconds, .

7. A method according to claim 6, further comprising the use of frequency domain signal processing to assist with artefact detection.

8. A method according to claim 6 or 7, further comprising processing the telephone signal as a sequence of frames, preferably wherein each frame has a duration of 50 milliseconds or less.

9. A method according to claim 8, wherein the frame duration and/or position is determined by means of a neural network, preferably wherein the neural network is provided with an input comprising the pre-processed telephone signal and a training example comprising a telephone signal with an artefact determined from a telephony environment and/or artificially generated.

10. A method according to any of claims 8 or 9, wherein the frame duration and/or position is determined by a parameter in dependence on the telephone signal source.

11. A method according to any of claims 8 to 10, wherein the frames are processed individually.

12. A method according to any of claims 8 to 10, wherein the frames are processed in at least pairs and compared pairwise.

13. A method according to any of claims 8 to 12, further comprising at least one of:

   i) attenuating the telephone signal in the region of the artefact comprises dropping the frame in which the artefact is detected;
   ii) attenuating the telephone signal in the region of the artefact comprises replacing the frame in which the artefact is detected;
   iii) replacing the frame with a frame containing no artefact, or a frame containing a noise signal, or a copy of a previous frame or portion of a previous frame.

**14.** A method according to any of claims 1 to 5 wherein the artefact (210, 300) comprises a data packet in the telephone signal indicative of the presence of a residual data signal fragment associated with an earlier attempted attenuation of a data signal, the method further comprising:

buffering a first portion of the telephone signal;
on detection of an indicative data packet in a second portion of the telephone signal, deleting the buffered first portion of the telephone signal,
preferably wherein at least one of:

i) the indicative data packet is one of: a RFC 2833 packet, a RFC 4733 packet, a SIP INFO message, a SIP NOTIFY message, or a SIP KPML message or similar;
ii) the duration of the buffered first portion of the telephone signal is less than 300 milliseconds;
iii) the duration of the buffered first portion of the telephone signal buffered is such that the end-to-end delay of the system as a whole is less than 100 milliseconds;
iv) the duration of the buffered first portion of the telephone signal is determined in dependence on probability statistics of the delay between the arrival of residual data signal fragments and related indicative data packets;
v) the likelihood of residual data signal fragments is determined in dependence on a probability function relating the likely presence of residual data signal fragments to the rate of receipt of data signals.

**15.** A method according to claim 14 followed by the method according to any of claims 6 to 13.

**16.** A telephone call processor (50) for processing telephone calls comprising voice signals and data signals, the call processor being adapted to carry out the method of any preceding claim.

**Patentansprüche**

**1.** Verfahren zum Verarbeiten eines Telefonsignals, das Sprachsignale und Datensignale umfasst, wobei das Verfahren Folgendes umfasst:

Detektieren der Anwesenheit eines Artefakts (210, 300) in dem Telefonsignal, wodurch die Anwesenheit eines Restdatensignalfragments angegeben wird, das einer früheren versuchten Dämpfung eines Datensignals zugeordnet ist; und
Verarbeiten des Telefonsignals durch weiteres Dämpfen des Telefonsignals in der Region des Artefakts (210, 300), um das Restdatensignalfragment aus dem Telefonsignal zu entfernen.

**2.** Verfahren nach Anspruch 1, wobei das Datensignal mindestens eines von Folgendem umfasst:

a) ein akustisches Signal,
b) ein akustisches Signal gemäß einem akustischen Datenübertragungsprotokoll und
c) einem DTMF-Ton.

**3.** Verfahren nach Anspruch 1 oder 2, wobei Dämpfen des Telefonsignals in der Region des Artefakts mindestens eines von Folgendem umfasst:

a) Weglassen oder Abwerfen oder Löschen eines Teils des Telefonsignals,
b) Ersetzen eines Teils des Telefonsignals und/oder
c) Modifizieren eines Teils des Telefonsignals.

**4.** Verfahren nach einem der vorhergehenden Ansprüche, das ferner Dämpfen des Telefonsignals nur dann umfasst, wenn erwartet wird, dass Restdatensignalfragmente anwesend sind.

**5.** Verfahren nach einem der vorhergehenden Ansprüche, wobei Verarbeiten des Telefonsignals im Zeitbereich stattfindet.

**6.** Verfahren nach einem der vorhergehenden Ansprüche, wobei das Artefakt (210, 300) eine Spitze in dem Telefonsignal umfasst, definiert dadurch, dass das Verhältnis der maximalen oder Spitzenamplitude des Telefonsignals zum Grundrauschen eine Schwelle übersteigt, wobei vorzugsweise die Dauer des Artefakts kleiner als 40 Millisekunden ist.

**7.** Verfahren nach Anspruch 6, das ferner Verwendung von Frequenzbereichssignalverarbeitung umfasst, um bei der Artefaktdetektion zu helfen.

**8.** Verfahren nach Anspruch 6 oder 7, das ferner Verarbeiten des Telefonsignals als eine Sequenz von Rahmen umfasst, wobei vorzugsweise jeder Rahmen eine Dauer von 50 Millisekunden oder weniger aufweist.

**9.** Verfahren nach Anspruch 8, wobei die Rahmendauer und/oder -position mittels eines neuronalen Netzes bestimmt wird, wobei vorzugsweise das neuronale Netz eine Eingabe, die das vorverarbeitete Telefonsignal umfasst, und ein Trainingsbeispiel, das ein Telefonsignal mit einem aus einer Telefonieumgebung bestimmten und/oder künstlich erzeugten Artefakt umfasst, erhält.

**10.** Verfahren nach einem der Ansprüche 8 oder 9, wobei die Rahmendauer und/oder -position durch einen Parameter in Abhängigkeit von der Telefonsignalquelle bestimmt wird.

**11.** Verfahren nach einem der Ansprüche 8 bis 10, wobei die Rahmen einzeln verarbeitet werden.

**12.** Verfahren nach einem der Ansprüche 8 bis 10, wobei die Rahmen in mindestens Paaren verarbeitet und paarweise verglichen werden.

**13.** Verfahren nach einem der Ansprüche 8 bis 12, das mindestens eines von Folgendem umfasst:

i) Dämpfen des Telefonsignals in der Region des Artefakts umfasst Abwerfen des Rahmens, in dem das Artefakt detektiert wird;
ii) Dämpfen des Telefonsignals in der Region des Artefakts umfasst Ersetzen des Rahmens, in dem das Artefakt detektiert wird;
iii) Ersetzen des Rahmens mit einem Rahmen, der kein Artefakt enthält, oder einem Rahmen, der ein Rauschsignal enthält, oder einer Kopie eines vorherigen Rahmens oder Teil eines vorherigen Rahmens.

**14.** Verfahren nach einem der Ansprüche 1 bis 5, wobei das Artefakt (210, 300) Folgendes umfasst:
ein Datenpaket in dem Telefonsignal, wodurch die Anwesenheit eines Restdatensignalfragments angegeben wird, das einer früheren versuchten Dämpfung eines Datensignals zugeordnet ist, wobei das Verfahren ferner Folgendes umfasst:

Puffern eines ersten Teils des Telefonsignals;
bei Detektion eines indikativen Datenpakets in einem zweiten Teil des Telefonsignals Löschen des gepufferten ersten Teils des Telefonsignals, wobei vorzugsweise mindestens eines von Folgendem gilt:

i) das indikative Datenpaket ist ein RFC-2833-Paket, ein RFC-4733-Paket, eine SIP-INFO-Nachricht, eine SIP-NOTIFY-Nachricht oder eine SIP-KPML-Nachricht oder ähnliches;
ii) die Dauer des gepufferten ersten Teils des Telefonsignals ist kleiner als 300 Millisekunden;
iii) die Dauer des gepufferten ersten Teils des gepufferten Telefonsignals ist dergestalt, dass die Verzögerung von Ende zu Ende des Systems als Ganzes kleiner als 100 Millisekunden ist;
iv) die Dauer des gepufferten ersten Teils des Telefonsignals wird in Abhängigkeit von Wahrscheinlichkeitsstatistiken der Verzögerung zwischen der Ankunft von Restdatensignalfragmenten und diesbezüglichen indikativen Datenpaketen bestimmt;
v) die Wahrscheinlichkeit von Restdatensignalfragmenten wird in Abhängigkeit von einer Wahrscheinlichkeitsfunktion bestimmt, die wahrscheinliche Anwesenheit von Restdatensignalfragmenten mit der Rate des Empfangs von Datensignalen in Beziehung setzt.

**15.** Verfahren nach Anspruch 14, gefolgt von dem Verfahren nach einem der Ansprüche 6 bis 13.

**16.** Telefonanruf-Prozessor (50) zum Verarbeiten von Telefonanrufen, die Sprachsignale und Datensignale umfassen, wobei der Anrufprozessor dafür ausgelegt ist, das Verfahren nach einem der vorhergehenden Ansprüche auszuführen.

**Revendications**

1. Procédé de traitement d'un signal téléphonique comprenant des signaux vocaux et des signaux de données, le procédé comprenant les étapes consistant à :

   détecter la présence d'un artefact (210, 300) dans le signal téléphonique indiquant la présence d'un fragment de signal de données résiduel associé à une tentative d'atténuation antérieure d'un signal de données ; et traiter le signal téléphonique en atténuant davantage le signal téléphonique dans la région de l'artefact (210, 300) afin d'éliminer le fragment de signal de données résiduel du signal téléphonique.

2. Procédé selon la revendication 1, dans lequel le signal de données comprend au moins l'un parmi :

   a) un signal acoustique,
   b) un signal acoustique selon un protocole de transmission de données acoustiques, et
   c) une tonalité DTMF

3. Procédé selon la revendication 1 ou 2, dans lequel l'atténuation du signal téléphonique dans la région de l'artefact comprend au moins l'un parmi le fait de :

   a) omettre ou supprimer ou supprimer une partie du signal téléphonique,
   b) remplacer une partie du signal téléphonique, et/ou
   c) modifier une partie du signal téléphonique.

4. Procédé selon l'une quelconque des revendications précédentes, comprenant en outre l'atténuation supplémentaire du signal téléphonique uniquement lorsque l'on s'attend à ce que des fragments de signal de données résiduels soient présents.

5. Procédé selon l'une quelconque des revendications précédentes, dans lequel le traitement du signal téléphonique se produit dans le domaine temporel.

6. Procédé selon l'une quelconque des revendications précédentes, dans lequel l'artefact (210, 300) comprend le fait qu'un pic dans le signal téléphonique, défini par le rapport de l'amplitude maximale ou de crête du signal téléphonique sur le plancher de bruit dépasse un seuil, de préférence dans lequel la durée de l'artefact est inférieure à 40 millisecondes,

7. Procédé selon la revendication 6, comprenant en outre l'utilisation d'un traitement de signal dans le domaine fréquentiel pour aider à la détection d'artefacts.

8. Procédé selon la revendication 6 ou 7, comprenant en outre le traitement du signal téléphonique sous la forme d'une séquence de trames, de préférence dans lequel chaque trame a une durée de 50 millisecondes ou moins.

9. Procédé selon la revendication 8, dans lequel la durée et/ou la position de la trame est déterminée au moyen d'un réseau neuronal, de préférence dans lequel le réseau neuronal est pourvu d'une entrée comprenant le signal téléphonique prétraité et d'un exemple d'apprentissage comprenant un signal téléphonique avec un artefact déterminé à partir d'un environnement téléphonique et/ou généré artificiellement.

10. Procédé selon l'une quelconque des revendications 8 ou 9, dans lequel la durée et/ou la position de la trame est déterminée par un paramètre dépendant de la source du signal téléphonique.

11. Procédé selon l'une quelconque des revendications 8 à 10, dans lequel les trames sont traitées individuellement.

12. Procédé selon l'une quelconque des revendications 8 à 10, dans lequel les trames sont traitées au moins par paires et comparées par paires.

13. Procédé selon l'une quelconque des revendications 8 à 12, comprenant en outre au moins l'un parmi :

   i) l'atténuation du signal téléphonique dans la région de l'artefact comprend la suppression de la trame dans laquelle l'artefact est détecté ;

ii) l'atténuation du signal téléphonique dans la région de l'artefact comprend le remplacement de la trame dans laquelle l'artefact est détecté ;

iii) le remplacement de la trame par une trame ne contenant aucun artefact, ou une trame contenant un signal de bruit, ou une copie d'une trame précédente ou d'une partie d'une trame précédente.

14. Procédé selon l'une quelconque des revendications 1 à 5, dans lequel l'artéfact (210, 300) comprend un paquet de données dans le signal téléphonique indiquant la présence d'un fragment de signal de données résiduel associé à une tentative antérieure d'atténuation d'un signal de données, le procédé comprenant en outre les étapes consistant à :

mettre en mémoire tampon une première partie du signal téléphonique ;
lors de la détection d'un paquet de données indicatif dans une deuxième partie du signal téléphonique, supprimer la première partie mise en mémoire tampon du signal téléphonique,
de préférence dans lequel au moins l'un de :

i) le paquet de données indicatif est l'un parmi : un paquet RFC 2833, un paquet RFC 4733, un message SIP INFO, un message SIP NOTIFY ou un message SIP KPML ou similaire ;
ii) la durée de la première partie mise en mémoire tampon du signal téléphonique est inférieure à 300 millisecondes ;
iii) la durée de la première partie mise en mémoire tampon du signal téléphonique mis en mémoire tampon est telle que le retard de bout en bout du système dans son ensemble est inférieur à 100 millisecondes ;
iv) la durée de la première partie mise en mémoire tampon du signal téléphonique est déterminée en fonction des statistiques de probabilité du retard entre l'arrivée des fragments de signal de données résiduels et des paquets de données indicatifs associés ;
v) la probabilité de la présence de fragments de signal de données résiduels est déterminée en fonction d'une fonction de probabilité reliant la présence probable de fragments de signal de données résiduels au débit de réception de signaux de données.

15. Procédé selon la revendication 14 suivi du procédé selon l'une quelconque des revendications 6 à 13.

16. Processeur d'appels téléphoniques (50) pour traiter des appels téléphoniques comprenant des signaux vocaux et des signaux de données, le processeur d'appels étant adapté pour exécuter le procédé selon l'une quelconque des revendications précédentes.

Figure 1

EP 3 603 043 B1

Figure 2

EP 3 603 043 B1

Figure 3

Figure 4

17

Figure 5

Figure 6

**EP 3 603 043 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2473376 A
- US 8831204 B
- US 2003194082 A
- US 6199036 B
- US 6674855 B
- EP 1093310 A